# EUROPEAN PATENT SPECIFICATION

(11) **EP 3 333 746 B1**
(45) Date of publication and mention of the grant of the patent: **29.05.2019**
(21) Application number: 17176091.1
(22) Date of filing: 14.06.2017
(51) Int. Cl.: G06F 21/56, G06F 9/455

(54) **SYSTEM AND METHOD OF EXECUTION OF CODE BY AN INTERPRETER**
SYSTEM UND VERFAHREN ZUR AUSFÜHRUNG VON CODES DURCH EINEN ÜBERSETZER
SYSTÈME ET PROCÉDÉ D'EXÉCUTION D'UN CODE PAR UN INTERPRÈTE

(30) Priority: 12.12.2016 RU 2016148489; 01.03.2017 US 201715446157
(43) Date of publication of application: 13.06.2018
(73) Proprietor: AO Kaspersky Lab, Moscow 125212 (RU)
(72) Inventor: DAVYDOV, Vasily A., 125212 Moscow (RU); VINOGRADOV, Dmitry V., 125212 Moscow (RU); GAVRILCHENKO, Roman Y., 125212 Moscow (RU); KIRSANOV, Dmitry A., 125212 Moscow (RU)
(74) Representative: Chimini, Francesco

(56) References cited:
- EP-A2- 1 394 677
- EP-A2- 2 306 356
- US-A1- 2012 266 244

## Description

### Field of Technology

The disclosure relates generally to the field of interpreters, and more specifically to systems and method for execution of program code by an interpreter.

### Background

Emulators are being increasingly used by antivirus applications for analysis of computer program code for the presence of a malicious functionality. Such method is usually employed to analyze a code written in script programming languages. Generally, the emulator includes a syntactical analyzer (parser) and an interpreter. The syntactical analyzer converts the program code being analyzed into an intermediate code (such as byte code). The interpreter, using the intermediate code and an emulated execution environment, successively executes (i.e., interprets) the instructions of the intermediate code in accordance with the rules of interpretation. During the emulation, the code being analyzed has no access to the resources of the actual computer system, since its execution takes place in the emulated environment. Thus, the code being executed in the emulator cannot delete or alter files on the computer, read data from the files, or otherwise inflict harm on the computer system in which it runs.

At the same time, it is quite difficult to implement an emulator which is able to interpret all objects (functions, procedures and methods, instances of classes, and so forth) of a code being executed. Cybercriminals make use of this fact and often include rarely used objects in their program code. Therefore, if the returned value of a particular object (e.g., a function) does not correspond to the expected value of execution of this object, the malicious code "understands" that it is being executed inside an emulator and ceases its further execution or does not execute the malicious functionality, so as not to be detected.

In turn, the makers of antivirus applications strive to efficiently add rules of interpretation to the emulators for new objects included by cybercriminals in their malicious code. However, this usually requires a changing of the program code of the emulator itself. After each such change, a testing and debugging of the program code of the emulator is required and thus the updated version of the emulator cannot be provided efficiently to the users of the antivirus. A technical problem arises, consisting in the need for interpretation (i.e., execution by an interpreter) of instructions of an investigated program code that contain objects for which the interpreter lacks a rule of interpretation (i.e., a program code whose result of execution corresponds to the result of the execution of the corresponding instruction), without changing the actual program code of the interpreter. The object may be a procedure, a class instance, a method or variable of a class instance, a script or even a file.

US 2012/266244 A1 discloses a method for detecting script-based malware using emulation and heuristics; EP 2 306 356 A2 discloses a system and a method for malware detection based on the behavior of applications running on a computer system; EP 1 394 677 A2 discloses a method and a system for a generation of compiled code for speeding up a simulator.

However, the existing antivirus technologies often unable to detect malicious code containing objects for which the emulator, and more specifically its interpreter, lacks a rule of interpretation and thus does not solve the aforementioned technical problem.

### Summary

The present invention is directed to systems, methods and computer program products for execution of program code by an interpreter for which the interpreter lacks rules of interpretation. One of the technical result of the present invention consists in improving the quality of execution by the interpreter of the investigated program code for which the interpreter lacks a rule of interpretation, without altering the interpreter itself, by interpreting an auxiliary program code.

In one example, a method of execution of program code by an interpreter comprises: executing, by the interpreter, instructions of the program code in an emulated computer environment; when detecting, by the interpreter, an instruction of the program code associated with an unknown object for which the interpreter lacks a rule of interpretation, halting by the interpreter further execution of the instructions of the program code; obtaining, by the interpreter, an auxiliary code whose result of execution corresponds to the result of the execution of the unknown object, wherein the auxiliary code contains known objects for which the interpreter has a rule of interpretation; executing, by the interpreter, the instructions of the auxiliary code; and after completion of the execution of the auxiliary code, by the interpreter, resuming the execution of the instructions of the program code.

In one example, the object being one of: a procedure, an instance of a class, a method or variable of an instance of a class, a script, a file, an auxiliary code.

In one example, the auxiliary code is obtained from the emulated computer environment.

In one example, the auxiliary code is obtained from a local database or a remote database.

In one example, the execution environment of the interpreter is initialized for the auxiliary code.

In one example, the execution of the code and the execution of the auxiliary code includes one or more of: performing lexical analysis of the code; performing syntactical analysis of the code; creating an intermediate code; and interpreting the intermediate code according to the rules of interpretation.

In one example, the auxiliary code additionally contains at least one other unknown object for which another auxiliary code is obtained, the result of the execution of said other auxiliary code corresponding to the result of execution of the other unknown object.

In one example, the method further comprises: performing an antivirus check of the interpreted code.

In one example, a system of execution of program code by an interpreter comprises a hardware processor executing an interpreter in an emulated computer environment, wherein the interpreter configured to: execute instructions of the program code; when detecting, by the interpreter, an instruction of the program code associated with an unknown object for which the interpreter lacks a rule of interpretation, halt further execution of the instructions of the program code; obtain an auxiliary code whose result of execution corresponds to the result of the execution of the unknown object, wherein the auxiliary code contains known objects for which the interpreter has a rule of interpretation; execute the instructions of the auxiliary code; and after completion of the execution of the auxiliary code, resume the execution of the instructions of the program code.

The above simplified summary of example aspects of the invention serves to provide a basic understanding of the invention. This summary is not an extensive overview of all contemplated aspects, and is intended to neither identify key or critical elements of all aspects nor delineate the scope of any or all aspects of the invention. To the accomplishment of the foregoing, the one or more aspects of the invention include the features described and particularly pointed out in the claims.

### Brief Description of the Drawings

The accompanying drawings, which are incorporated into and constitute a part of this specification, illustrate one or more example aspects of the present disclosure and, together with the detailed description, serve to explain their principles and implementations.
**Fig. 1** illustrates an exemplary system for execution of program code by an interpreter.
**Fig. 2** illustrates an exemplary system for execution of program code by an interpreter.
**Fig. 3** illustrates an exemplary method for execution of program code by an interpreter.
**Fig. 4** illustrates an example of a general-purpose computer system on which the systems and methods for execution of program code by an interpreter can be implemented.

### Detailed Description

Example aspects on the invention are described herein in the context of a system, method and computer program product for execution of program code by an interpreter. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

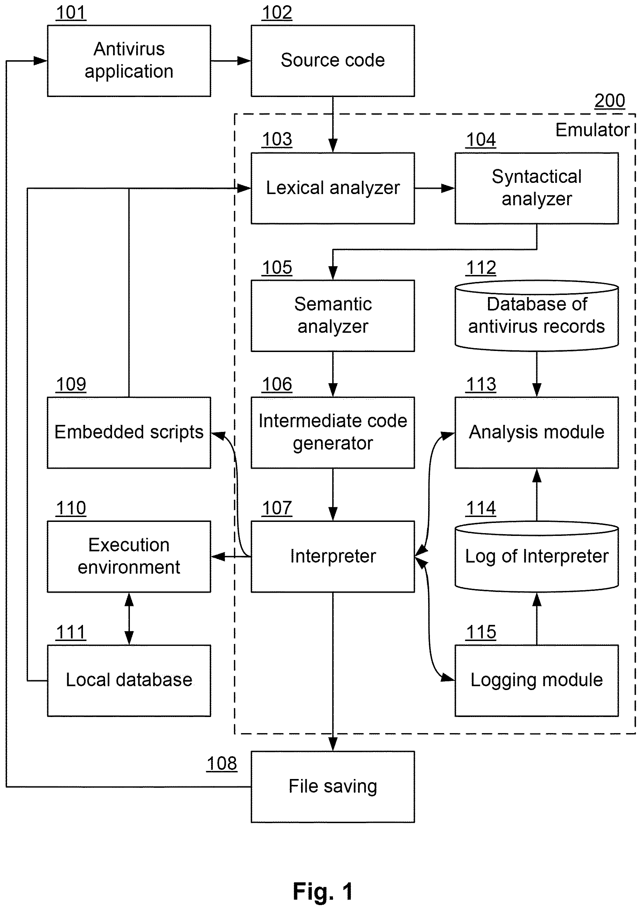

**Fig. 1** illustrates an exemplary system for execution of program code by an interpreter. The antivirus application **101** is a computer program providing information security on a computer system on which it is deployed. The antivirus application **101** passes program code **102** for analysis to emulator **200.** In one example, the emulator **200** is part of the antivirus application **101.** The source program code **102** can be written in a script programming language, such as JavaScript, VB Script, Python and others. In one example, the emulator **200** may include, but not limited to, a lexical analyzer **103**, a syntactical analyzer **104**, a semantic analyzer **105**, an intermediate code generator **106**, an interpreter **107**, a logging module **115** and an analysis module **113.** In one example, the interpreter **107** contains a virtual machine.

In one example, the lexical analyzer **103** reads the string of characters constituting the source program code **102**, and groups these characters into meaningful sequences, or lexemes. For each lexeme, an output token is constructed and passed to the syntactical analyzer **104.** The syntactical analyzer **104** uses the tokens to create a treelike intermediate code which describes the grammatical structure of the string of tokens, or a syntax tree. The semantic analyzer **105** uses the syntax tree to check the source program code for semantic consistency with a language definition. The intermediate code generator **106** creates an intermediate code, which is passed to the interpreter **107.** The intermediate code is unified and not dependent on the language in which the source code **102** is written.

The interpreter **107** executes (or interprets) the code in an execution environment **110.** The execution environment **110** (run-time environment) solves the problems of the allocation scheme and memory for the named objects of the code being executed, and provides mechanisms for access to variables, links between procedures, mechanisms of transfer of parameters, interaction with the operating system, with the I/O devices, and with other programs. Accordingly, the initialization of the execution environment **110** involves assignment of memory and providing access to the variables and the data to the interpreter **107.** It should be noted that the interpreter **107** can only execute the intermediate code created by the intermediate code generator **106.** For convenience of description, the terms investigated code and intermediate code are considered to be equivalent. The intermediate or investigated code is a machine-independent code (it will be executed by the interpreter for different computer architectures). Thus, regardless of the programming language in which the source code **102** was written, and due to the working of the lexical, syntactical and semantic analyzers **103-105** and the intermediate code generator **106**, an investigated code will be created from the unified linguistic grammar, which the interpreter **107** will be able to execute.

The local database **111** is linked to the execution environment **110** and contains the rules of interpretation for the objects of the investigated code. In one example, an object is one of: a procedure, an instance of a class, a method or variable of an instance of a class. In yet another example, the investigated code may contain an embedded script code section **109**, and also code for working with files **108**, which are likewise objects. In this case, the execution of the code by the interpreter **107** will be done recursively. The embedded script, for example, has not been converted into intermediate code and consequently cannot be executed by the interpreter **107.** Thus, the embedded script **109** will have to be dispatched once more to the lexical analyzer **103** in order for the intermediate code generator **106** to create an intermediate code which will be executed by the interpreter **107.**

If, in the process of execution of the investigated code, a file was saved to disk **108**, the content of this file may also be executed by the interpreter **107.** However, the file content contains nonconverted code, and therefore the file will be handed over to the antivirus **101**, with subsequent conversion of the code by the modules **103-106** into intermediate code.

It should be noted that the present invention is not limited to the field of computer security and the use of interpreters for the antivirus scans of program code. However, it should likewise be underscored that the invention can be applied in any other field of computer technology where the execution of code by an interpreter is used, for example, to simplify the method of updating the rules of interpretation in a code interpreter.

In one example, the interpreter **107** can be additionally linked to a logging module **115**, which can perform a recording in the log of the interpreter **114** during the course of the execution of each instruction of the intermediate code in the interpreter **107.**

In one example, the analysis module **113** is configured to check the records of the log of the interpreter **114** for concurrence with the records of the database of antivirus records **112** according to the antivirus rules. The antivirus rules specify conditions under which the investigated file is recognized as being malicious or not malicious. If said records concur, the investigated code is determined to be malicious, and the analysis module **113** hands over this information to the interpreter **107.** The interpreter **107** in this case ceases further execution of the code and hands over control to the antivirus **101**, which alerts the computer user to the discovered threat (malicious file) and takes appropriate steps to eliminate the malicious content of the investigated code.

Table 1 below presents an example of antivirus records which concur in the log of the interpreter **114** and in the database of antivirus records **112.** Usually the antivirus records are called signatures. The first record of the table contains the record open, meaning that a request was made to obtain a file located at a URL address: "http://*****************exe***.jpg" ("*" means any given characters). The second record means that the request made was dispatched to a URL address. The third record means a saving of the data to the file "c:\\temp\\*********.exe". And the fourth record means starting the execution of the saved file. It is obvious that the consecutive execution of these four actions is usually characteristic of a malicious file. Therefore, the antivirus rule in this example will be as follows: if the log of the interpreter **114** contains a sequence of records 1-4 of table 1, the investigated code is given the verdict "HEUR:Trojan-Downloader.Script.Generic:" (see table 2). This verdict means that the investigated code and accordingly the source code **102** are a malicious file - a Trojan downloader.

**Table 1**

| Nº | Record | |
|---|---|---|
| | Name | Content |
| 1 | open | msxml2.xmlhttp.open("get","http://*****************exe***.jpg") |
| 2 | send | msxml2.xmlhttp.send("[get,http://******************exe***.jpg]") |
| 3 | save | adodb.stream.savetofile("c:\\temp\\*********.exe","2") |
| 4 | exec | wscript.shell.run("c:\\temp\\**********.exe","0","0") |

**Table 2**

| Antivirus rule |
|---|
| $on (open -> send -> save -> exec) |
| { |
| $verdict("HEUR:Trojan-Downloader.Script.Generic"); |
| } |

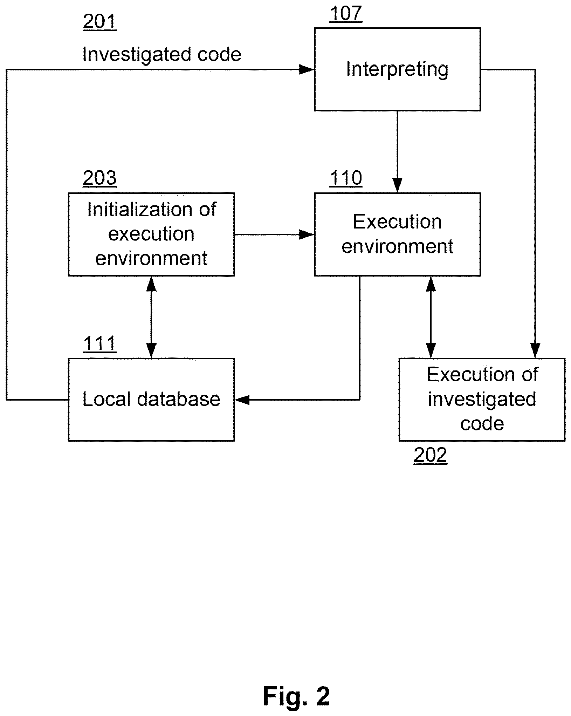

**Fig. 2** illustrates an exemplary system for execution of program code by an interpreter. The interpreter **107** is used for the consecutive execution of each instruction of the investigated code (the intermediate code) **201.** When the interpreter **107** moves on to execute an instruction of the investigated code **201** containing an object for which the interpreter lacks a rule of interpretation (i.e., an unknown object), the further execution of the investigated code **201** is halted. A rule of interpretation is a program code whose result of execution corresponds to the result of execution of the corresponding instruction. Next, the interpreter **107** obtains an auxiliary code whose result of execution corresponds to the result of execution of the unknown object, the auxiliary code containing those objects (i.e., unknown objects) for which the interpreter **107** has a rule of interpretation. Then the interpreter consecutively executes each instruction of the auxiliary code, and after completing the execution of the auxiliary code the interpreter **107** resumes the execution of the investigated code **201** with the next instruction of the investigated code **201**, until such time as the last instruction of the investigated code **201** has been executed.

In a one example, the object is one of the following: a procedure, a class instance, a method or variable of a class instance, a script, a file.

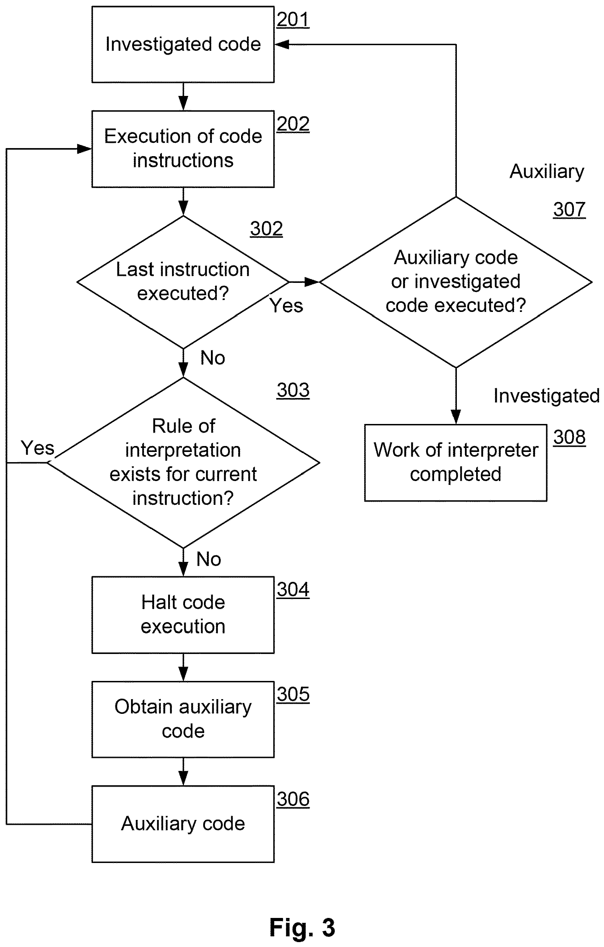

**Fig. 3** illustrates an exemplary method for execution of program code by an interpreter. The investigated code **201** arrives at the input of the interpreter **107** and, in step **301**, the interpreter **107** consecutively executes each instruction of the investigated code **201** in step **202.** When the interpreter **107** begins to execute an instruction of the investigated code **201** containing an object (unknown object) for which the interpreter **107** lacks a rule of interpretation (verification in step **303**), the further execution of the investigated code is halted in step **304**, and in step **305** the interpreter obtains an auxiliary code **306**, the result of whose execution corresponds to the result of execution of the aforementioned unknown object, the auxiliary code **306** containing only those objects (unknown objects) for which a rule of interpretation is present in the interpreter **107.** Next, the auxiliary code **306** is handed over for execution to the interpreter **107** in step **301**, where it consecutively executes each instruction of the auxiliary code **306**, and after completing the execution of the auxiliary code **306** it resumes the execution of the investigated code **201** in step **301** with the next instruction of the investigated code **201.** Verification of the completion of execution of the auxiliary code **306** occurs in step **302** and **307.** The working of the method of the invention goes on until the moment when the last instruction of the investigated code **201** is executed. This condition is verified in step **302** and **307.** After executing the last instruction of the investigated code **201,** the work of the interpreter **107** is finished in step **308.**

In a one example, in step **301** the interpreter **107** initializes the execution environment **110** of the interpreter **107** (step **203**). In yet another example, the auxiliary code **306** is contained in the execution environment **110** of the interpreter **107** and in step **305** the auxiliary code **306** is obtained from the execution environment **110.**

In one example, the auxiliary code **306** is obtained from a local database **111.** In this case, the execution environment (step **203**) for the auxiliary code **306** may be initialized, since upon initialization the execution environment **110** for the interpreter **107** does not contain the objects and variables used by the auxiliary code **306.**

In one example, the auxiliary code **306** is obtained from a remote database (not shown in the figure) when said auxiliary code **306** is absent from the local database **111.**

In one example, a logging module **115** is used to record in the log of the interpreter **114** each instruction or portion of an instruction of the code during execution (in step **301**). The list of instructions for which it is necessary to make a record in the log of the interpreter **114** may be contained in the emulator **200.** An analysis module **113** is used to check the matching of the records in the log of the interpreter **107** and in the database of antivirus records **112** according to the antivirus rules when making said records. If said records match, the investigated code **102** is found to be malicious.

In one example, the execution of the code and the execution of the auxiliary code involve the following steps: lexical analysis with the use of a lexical analyzer **103**, syntactical analysis with the use of a syntactical analyzer **104**, semantic analysis with the use of a semantic analyzer **105**, creation of an intermediate code by an intermediate code generator **106** and interpreting of the intermediate code according to the rules of interpretation by means of the interpreter **107.**

It should be noted that the auxiliary code **306** can be written either in the language of the source code **102** or in the language of the converted investigated code **201**, i.e., in converted form. For example, if the source language is JavaScript, then the converted language is a byte-code of a virtual Java machine. In one example, when the auxiliary code **306** is written in the language of the source code **102**, the auxiliary code **306** will at first be handed over to the lexical analyzer **103**, then to the syntactical analyzer **104** and the semantic analyzer **105** and, finally, the intermediate code generator **106** will construct from the auxiliary code **306** an auxiliary code in converted form, which will then be executed by the interpreter **107.** In one example, after the conversion of the auxiliary code **306** it may be saved in converted form along with the nonconverted auxiliary code **306** or in a separate storage/cache. When this auxiliary code is next requested by the interpreter **107**, the auxiliary code in converted form will then be returned to the interpreter **107.**

In another example, when the auxiliary code **306** has initially been provided in converted form, it will be dispatched at once to the interpreter **107** for execution.

Table 3 below presents an example of a portion of a source code **107** which is malicious. For better understanding, the actual source code **102** is given, and not the converted investigated code **201.** Line 4 contains an invoking of the object "Scripting.Dictionary", for which a rule of interpretation was lacking in the beginning. In this example, the object "Scripting.Dictionary" is an unknown object. Therefore, in step 4, the execution of the investigated code at the interpreter **107** will be halted, and the interpreter **107** will be provided with the auxiliary code **306** from table 4, whose result of execution corresponds to the result of execution upon invoking the object "Scripting.Dictionary" in line 4 of table 3. After executing the auxiliary code **306**, the execution of the investigated code will be resumed from line 5 of table 3 onward. The auxiliary code **306** from table 4 contains only those objects (unknown objects) for which a rule of interpretation is present in the interpreter **107.**

It should be noted that the invoking of rare objects, such as functions, is usually characteristic of malicious files - in this way the malicious file checks whether it is being executed in an emulator, and not in a real computer.

**Table 3**

| Line | Source code |
|---|---|
| 1 | var yoryymvz=3; |
| 2 | var izzfhhpg=jiijyamm.split(""); |
| 3 | var rtrslnmj=""; |
| 4 | var y=new ActiveXObject("Scripting.Dictionary"); |
| 5 | y.add("a","t"); (y.Item("a")=="t") |
| 6 | if |
| 7 | { |
| 8 | rtrslnmj="bjd"; |
| 9 | } |
| 10 | else |
| 11 | { |
| 12 | yoryymvz=0; |
| 13 | } |
| 14 | ; |
| 15 | for (i=0; i<izzfhhpg.length; i+=yoryymvz) |
| 16 | { |
| 17 | bsvuyeigy=bsvuyeigy+izzfhhpg[i]; |
| 18 | } |
| 19 | var rtrslnmj="bjdebjdvbjdabjdl".split(rtrslnmj).join(""); |
| 20 | this[rtrslnmj](bsvuyeigy); |

**Table 4**

| Line | Auxiliary code |
|---|---|
| 1 | obj = {}; |
| 2 | obj.prototype.add = function(p1, p2) |
| 3 | { |
| 4 | this[p1] = p2; |
| 5 | } |
| 6 | obj.prototype.Item = function(p) |
| 7 | { |
| 8 | return this[p]; |
| 9 | } |
| 10 | Scripting.Dictionary = obj; |

In yet another example, the auxiliary code **306** may further contain other unknown objects for which a corresponding other auxiliary code can be obtained, whose result of execution corresponds to the result of execution of the other unknown object.

Table 5 presents an example of known objects. Table 6 presents an example of how the auxiliary code for unknown objects contains known and unknown objects.

For example, the auxiliary code for the unknown object G contains only the known objects A, B, C. At the same time, the auxiliary code for the unknown object H contains both known objects A, B, and another unknown object G. But for the other unknown object G there is also present another auxiliary code, which in turn is dependent on known objects A, B, C.

Thus, in the given example, when an instruction in the investigated code **201** is executed in step **202** that contains the unknown object H, the execution of the investigated code will be halted at step **304.** Then the auxiliary code **306** for the object H will be obtained in step **305**, whose execution will be continued in step **202.** When executing the auxiliary code for the object H, if an instruction is executed that contains the other unknown object G, a different auxiliary code will now be obtained in step **305** for the other unknown object G, whose execution will continue in step **202.** After completing the execution of the other auxiliary code for the object G, the execution of the auxiliary code **306** for the object H will continue, and then after completing the execution of the auxiliary code **306** for the object H the execution of the investigated code **201** will be continued. Obviously, the investigated code **201** may contain other unknown objects for which once more obtaining an auxiliary code is required. Furthermore, the dependency of unknown objects on known objects may be embedded as deeply as desired.

**Table 5**

| Known objects |
|---|
| A, B, C, D, E, F |

**Table 6**

| Unknown object | Auxiliary code contains objects |
|---|---|
| G | A, B, C |
| H | A, B, G |

One technical result of the systems and method of the present invention described above, consisting in improvement of the quality of execution by the interpreter of the investigated program code, is achieved by the interpreting of an auxiliary program code. The improvement of the quality of execution by the interpreter of the investigated program code consists in the fact that the interpreter continues to execute the investigated program code even when the investigated program code contains objects for which the interpreter lacks a rule of interpretation. The known interpreters and emulators of the prior art complete their execution with an error when executing instructions which contain unknown functions.

Another technical result of the systems and method of the present invention described above, consisting in enabling the execution by the interpreter of instructions of the investigated program code for which the interpreter lacks a rule of interpretation, without altering the interpreter itself, is achieved by the interpreting of an auxiliary program code. This technical result is achieved because, due to the executing of the auxiliary code by the interpreter, the execution of the investigated code will not be halted on account of the absence of any rule of interpretation for instructions for which interpreter lacks a rule of interpretation.

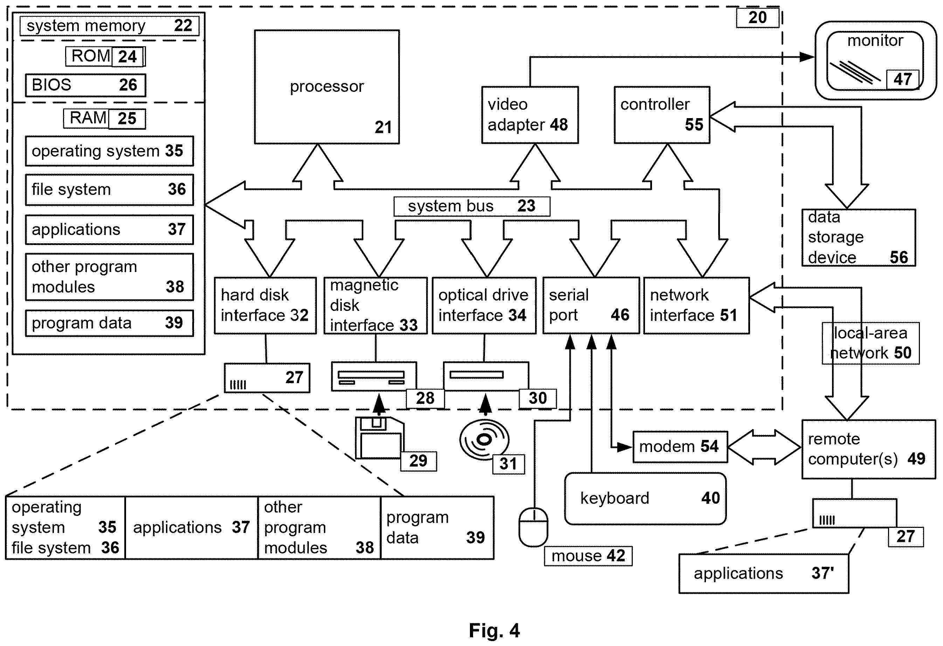

**Fig. 4** is an example of a general-purpose computer system on which the systems and methods for execution of program code by an interpreter can be implemented. As shown, the computer system **20** (which may be a personal computer or a server) includes a central processing unit **21**, a system memory **22** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20**, such as those at the time of loading the operating system with the use of the ROM **24.**

The computer system **20**, may also comprise a hard disk **27** for reading and writing data, a magnetic disk drive **28** for reading and writing on removable magnetic disks 29, and an optical drive **30** for reading and writing removable optical disks **31**, such as CD-ROM, DVD-ROM and other optical media. The hard disk **27**, the magnetic disk drive **28**, and the optical drive **30** are connected to the system bus **23** across the hard disk interface **32**, the magnetic disk interface **33** and the optical drive interface **34**, respectively. The drives and the corresponding computer information media are power-independent modules for storage of computer instructions, data structures, program modules and other data of the computer system **20.**

An exemplary aspect comprises a system that uses a hard disk **27**, a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36**, in which the operating system **35**, may be stored, as well as additional program applications **37**, other program modules **38**, and program data **39.** A user of the computer system **20** may enter commands and information using keyboard 40, mouse 42, or any other input device known to those of ordinary skill in the art, such as, but not limited to, a microphone, joystick, game controller, scanner, *etc..* Such input devices typically plug into the computer system **20** through a serial port **46**, which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47**, the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54**, which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Fig. 4, *supra*). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

## Claims

1. A method of execution of program code (102) by an interpreter (107), the method comprising:
executing, by the interpreter (107), instructions of the program code (102) in an emulated computer environment (200);
when detecting, by the interpreter (107), an instruction of the program code (102) associated with an unknown object for which the interpreter (107) lacks a rule of interpretation, halting by the interpreter (107) further execution of the instructions of the program code (102);
the method being **characterized by**:
obtaining, by the interpreter (107), an auxiliary code (306) whose result of execution corresponds to the result of the execution of the unknown object, wherein the auxiliary code (306) contains known objects for which the interpreter (107) has a rule of interpretation;
executing, by the interpreter (107), the instructions of the auxiliary code (306) ; and
after completion of the execution of the auxiliary code (306), by the interpreter (107), resuming the execution of the instructions of the program code (102).

2. The method according to claim 1, wherein the object being one of: a procedure, an instance of a class, a method or variable of an instance of a class, a script, a file, an auxiliary code.

3. The method according to any of claims 1 to 2, wherein the auxiliary code (306) is obtained from the emulated computer environment.

4. The method according to any of claims 1 to 3, wherein the auxiliary code (306) is obtained from a local database or a remote database.

5. The method according to any of claims 1 to 4, wherein the execution environment of the interpreter (107) is initialized for the auxiliary code (306).

6. The method according to any of claims 1 to 5, wherein the execution of the code and the execution of the auxiliary code (306) includes one or more of: performing lexical analysis (103) of the code (102); performing syntactical analysis (104) of the code; creating an intermediate code (106); and interpreting the intermediate code (106) according to the rules of interpretation.

7. The method according to any of claims 1 to 6, wherein the auxiliary code (306) additionally contains at least one other unknown object for which another auxiliary code (306) is obtained, the result of the execution of said other auxiliary code corresponding to the result of execution of the other unknown object.

8. The method according to any of claims 1 to 7, further comprising: performing an antivirus check of the interpreted code (102).

9. A system of execution of program code by an interpreter, the system comprising:
a hardware processor (21) executing an interpreter (107) in an emulated computer environment (200), wherein the interpreter configured to:
execute instructions of the program code (102);
when detecting, by the interpreter (107), an instruction of the program code (102) associated with an unknown object for which the interpreter (107) lacks a rule of interpretation, halt further execution of the instructions of the program code (102);
the system being **characterized in that** the interpreter is further configured to:
obtain an auxiliary code (306) whose result of execution corresponds to the result of the execution of the unknown object, wherein the auxiliary code (306) contains known objects for which the interpreter (107) has a rule of interpretation;
execute the instructions of the auxiliary code (306); and
after completion of the execution of the auxiliary code (306), resume the execution of the instructions of the program code (102).

10. The system according to claim 9, wherein the object being one of: a procedure, an instance of a class, a method or variable of an instance of a class, a script, a file, an auxiliary code.

11. The system according to any of claims 9 to 10, wherein the auxiliary code is obtained from the emulated computer environment (200).

12. The system according to any of claims 9 to 11, wherein the auxiliary code is obtained from a local database (111) or a remote database (111).

13. The system according to any of claims 9 to 12, wherein the execution environment (200) of the interpreter (107) is initialized for the auxiliary code (306).

14. The system according to any of claims 9 to 13, wherein the execution of the code (102) and the execution of the auxiliary code (306) includes one or more of: performing lexical analysis of the code; performing syntactical analysis of the code; creating an intermediate code; and interpreting the intermediate code according to the rules of interpretation.

15. The system according to any of claims 9 to 14, wherein the auxiliary code additionally contains at least one other unknown object for which another auxiliary code (306) is obtained, the result of the execution of said other auxiliary code (306) corresponding to the result of execution of the other unknown object.

16. The system according to any of claims 9 to 15, further comprising: performing an antivirus check of the interpreted code (102).

## Patentansprüche

1. Ein Verfahren zum Ausführen eines Programmcodes (102) mittels eines Interpreters (107), wobei das Verfahren Folgendes umfasst:
Ausführen von Befehlen des Programmcodes (102) durch den Interpreter (107) in einer emulierten Computerumgebung (200);
wenn der Interpreter (107) einen Befehl des Programmcodes (102) erkennt, der mit einem unbekannten Objekt assoziiert ist, für das der Interpreter (107) keine Interpretationsregel aufweist, stoppen des weiteren Ausführens der Befehle des Programmcodes (102) durch den Interpreter (107);
wobei das Verfahren **gekennzeichnet ist durch**:
Erhalten eines Hilfscodes (306), dessen
Ausführungsergebnis mit dem Ausführungsergebnis des unbekannten Objekts übereinstimmt, **durch** den Interpreter (107), wobei der Hilfscode (306) bekannte Objekte enthält, für die der Interpreter (107) eine Interpretationsregel aufweist;
Ausführen der Befehle des Hilfscodes (306) **durch** den Interpreter (107); und
nach Beenden des Ausführens des Hilfscodes (306) **durch** den Interpreter (107) Fortsetzen des Ausführens der Befehle des Programmcodes (102).

2. Das Verfahren gemäß Anspruch 1, wobei das Objekt eines ist von: einem Verfahen, einer Instanz einer Klasse, einem Verfahren oder einer Variante einer Instanz einer Klasse, einem Skript, einer Datei oder einem Hilfscode.

3. Das Verfahren nach einem der vorangehenden Ansprüche 1 bis 2, wobei der Hilfscode (306) aus der emulierten Computerumgebung erhalten wird.

4. Das Verfahren nach einem der vorangehenden Ansprüche 1 bis 3, wobei der Hilfscode (306) aus einer lokalen Datenbank oder einer externen Datenbank erhalten wird.

5. Das Verfahren nach einem der vorangehenden Ansprüche 1 bis 4, wobei die Ausführungsumgebung des Interpreters (107) für den Hilfscode (306) initialisiert wird.

6. Das Verfahren nach einem der vorangehenden Ansprüche 1 bis 5, wobei das Ausführen des Codes und das Ausführen des Hilfscodes (306) ein oder mehrere der folgenden Schritte umfasst: Ausführen einer lexikalischen Analyse (103) des Codes (102); Ausführen einer syntaktischen Analyse (104) des Codes; Erstellen eines Zwischencodes (106); und Interpretieren des Zwischencodes (106) gemäß den Interpretationsregeln.

7. Das Verfahren nach einem der vorangehenden Ansprüche 1 bis 6, wobei der Hilfscode (306) ferner wenigstens ein weiteres unbekanntes Objekt enthält, für das ein weiterer Hilfscode (306) erhalten wird, wobei das Ausführungsergebnis des anderen Hilfscodes dem Ausführungsergebnis des anderen unbekannten Objekts entspricht.

8. Das Verfahren nach einem der vorangehenden Ansprüche 1 bis 7 ferner umfassend:
Ausführen einer Antivirusprüfung des interpretierten Codes (102).

9. Ein System zum Ausführen eines Programmcodes durch einen Interpreter, wobei das System Folgendes umfasst:
einen Hardware-Prozessor (21), der einen Interpreter (107) in einer emulierten Computerumgebung (200) ausführt, wobei der Interpreter ausgebildet ist,
um Befehle des Programmcodes (102) auszuführen;
wenn der Interpreter (107) feststellt, dass ein Befehl des Programmcodes (102), der mit einem unbekannten Objekt, für das der Interpreter (107) keine Interpretationsregel aufweist, assoziiert ist, das weitere Ausführen der Befehle des Programmcodes (102) zu stoppen;
wobei das System **dadurch kennzeichnet ist, dass** der Interpreter ferner derart ausgebildet ist:
dass es einen Hilfscode (306), dessen Ausführungsergebnis mit dem Ausführungsergebnis des unbekannten Objekts übereinstimmt, abfragt, wobei der Hilfscode (306) bekannte Objekte enthält, für die der Interpreter (107) eine Interpretationsregel aufweist;
dass es die Befehle des Hilfscode (306) ausführt; und
dass es nach dem Beenden des Ausführens des Hilfscodes (306) das Ausführen der Befehle des Programmcodes (102) fortsetzt.

10. Das System gemäß Anspruch 9, wobei das Objekt eines ist von: einem Verfahren, einer Instanz einer Klasse, einem Verfahren oder einer Variante einer Instanz einer Klasse, einem Skript, einer Datei oder einem Hilfscode.

11. Das System nach einem der vorangehenden Ansprüche 9 bis 10, wobei der Hilfscode aus der emulierten Computerumgebung (200) erhalten wird.

12. Das System nach einem der vorangehenden Ansprüche 9 bis 11, wobei der Hilfscode aus einer lokalen Datenbank (111) oder externen Datenbank (111) erhalten wird.

13. Das System nach einem der vorangehenden Ansprüche 9 bis 12, wobei die Ausführungsumgebung (200) des Interpreters (107) für den Hilfscode (306) initialisiert ist.

14. Das System nach einem der vorangehenden Ansprüche 9 bis 13, wobei das Ausführen des Codes (102) und das Ausführen des Hilfscodes (306) ein oder mehrere der folgenden Schritte umfasst: Ausführen einer lexikalischen Analyse des Codes; Ausführen einer syntaktischen Analyse des Codes; Erstellen eines Zwischencodes und Interpretieren des Zwischencodes gemäß den Interpretationsregeln.

15. Das System nach einem der vorangehenden Ansprüche 9 bis 14, wobei der Hilfscode ferner wenigstens ein weiteres unbekanntes Objekt enthält, für das ein weiterer Hilfscode (306) erhalten wird, wobei das Ausführungsergebnis des Hilfscodes (306) dem Ausführungsergebnis des weiteren unbekannten Objekts entspricht.

16. Das System nach einem der vorangehenden Ansprüche 9 bis 15 ferner umfassend:
Ausführen einer Antivirusprüfung des interpretierten Codes (102).

## Revendications

1. Procédé d'exécution de code de programme (102) par un interpréteur (107), le procédé comprenant :
l'exécution, par l'interpréteur (107), d'instructions du code de programme (102) dans un environnement informatique émulé (200) ;
lors de la détection, par l'interpréteur (107), d'une instruction du code de programme (102) associée à un objet inconnu pour lequel l'interpréteur (107) n'a pas de règle d'interprétation, l'arrêt par l'interpréteur (107) de l'exécution ultérieure des instructions du code de programme (102) ;
le procédé étant **caractérisé par** :
l'obtention, par l'interpréteur (107), d'un code auxiliaire (306) dont le résultat d'exécution correspond au résultat de l'exécution de l'objet inconnu, dans lequel le code auxiliaire (306) contient des objets connus pour lesquels l'interpréteur (107) a une règle d'interprétation ;
l'exécution, par l'interpréteur (107), des instructions du code auxiliaire (306) ; et
après l'achèvement de l'exécution du code auxiliaire (306), par l'interpréteur (107), la reprise de l'exécution des instructions du code de programme (102).

2. Procédé selon la revendication 1, dans lequel l'objet est l'un parmi : une procédure, une instance d'une classe, un procédé ou une variable d'une instance d'une classe, un script, un fichier, un code auxiliaire.

3. Procédé selon l'une quelconque des revendications 1 à 2, dans lequel le code auxiliaire (306) est obtenu à partir de l'environnement informatique émulé.

4. Procédé selon l'une quelconque des revendications 1 à 3, dans lequel le code auxiliaire (306) est obtenu à partir d'une base de données locale ou d'une base de données distante.

5. Procédé selon l'une quelconque des revendications 1 à 4, dans lequel l'environnement d'exécution de l'interpréteur (107) est initialisé pour le code auxiliaire (306).

6. Procédé selon l'une quelconque des revendications 1 à 5, dans lequel l'exécution du code et l'exécution du code auxiliaire (306) comprennent au moins l'une ou plusieurs parmi : la réalisation d'une analyse lexicale (103) du code (102) ; la réalisation d'une analyse syntaxique (104) du code ; la création d'un code intermédiaire (106) ; et l'interprétation du code intermédiaire (106) selon les règles d'interprétation.

7. Procédé selon l'une quelconque des revendications 1 à 6, dans lequel le code auxiliaire (306) contient en outre au moins un autre objet inconnu pour lequel un autre code auxiliaire (306) est obtenu, le résultat de l'exécution dudit autre code auxiliaire correspondant au résultat d'exécution de l'autre objet inconnu.

8. Procédé selon l'une quelconque des revendications 1 à 7, comprenant en outre : la réalisation d'une vérification antivirus du code interprété (102).

9. Système d'exécution de code de programme par un interpréteur, le système comprenant :
un processeur matériel (21) exécutant un interpréteur (107) dans un environnement informatique émulé (200), dans lequel l'interpréteur est configuré pour :
exécuter des instructions du code de programme (102) ;
lors de la détection, par l'interpréteur (107), d'une instruction du code de programme (102) associée à un objet inconnu pour lequel l'interpréteur (107) n'a pas de règle d'interprétation, arrêter l'exécution ultérieure des instructions du code de programme (102) ;
le système étant **caractérisé en ce que** l'interpréteur est en outre configuré pour :
obtenir un code auxiliaire (306) dont le résultat d'exécution correspond au résultat de l'exécution de l'objet inconnu, dans lequel le code auxiliaire (306) contient des objets connus pour lesquels l'interpréteur (107) a une règle d'interprétation ;
exécuter les instructions du code auxiliaire (306) ; et
après l'achèvement de l'exécution du code auxiliaire (306), reprendre l'exécution des instructions du code de programme (102).

10. Système selon la revendication 9, dans lequel l'objet est l'un parmi : une procédure, une instance d'une classe, un procédé ou une variable d'une instance d'une classe, un script, un fichier, un code auxiliaire.

11. Système selon l'une quelconque des revendications 9 à 10, dans lequel le code auxiliaire est obtenu à partir de l'environnement informatique émulé (200).

12. Système selon l'une quelconque des revendications 9 à 11, dans lequel le code auxiliaire est obtenu à partir d'une base de données locale (111) ou d'une base de données distante (111).

13. Système selon l'une quelconque des revendications 9 à 12, dans lequel l'environnement d'exécution (200) de l'interpréteur (107) est initialisé pour le code auxiliaire (306).

14. Système selon l'une quelconque des revendications 9 à 13, dans lequel l'exécution du code (102) et l'exécution du code auxiliaire (306) comprennent l'une ou plusieurs parmi : la réalisation d'une analyse lexicale du code ; la réalisation d'une analyse syntaxique du code ; la création d'un code intermédiaire ; et l'interprétation du code intermédiaire selon les règles d'interprétation.

15. Système selon l'une quelconque des revendications 9 à 14, dans lequel le code auxiliaire contient en outre au moins un autre objet inconnu pour lequel un autre code auxiliaire (306) est obtenu, le résultat de l'exécution dudit autre code auxiliaire (306) correspondant au résultat d'exécution de l'autre objet inconnu.

16. Procédé selon l'une quelconque des revendications 9 à 15, comprenant en outre : la réalisation d'une vérification antivirus du code interprété (102).
